# EUROPÄISCHE PATENTSCHRIFT

(11) **EP 3 913 949 B1**
(45) Veröffentlichungstag und Bekanntmachung des Hinweises auf die Patenterteilung: **11.05.2022**
(21) Anmeldenummer: 20175415.7
(22) Anmeldetag: 19.05.2020
(51) Int. Cl.: H04W 12/55, H04W 4/50, H04L 12/28, H04W 4/80, H04W 84/12, H04W 88/18

(54) **VERFAHREN UND COMPUTERPROGRAMM ZUR ÜBERGABE EINER BEREITS EINGERICHTETEN DRAHTLOSKOMMUNIKATIONSKOPPLUNG ZWISCHEN EINEM ERSTEN MOBILEN ENDGERÄT UND EINEM ERSTEN DRAHTLOSKOMMUNIKATIONSFÄHIGEN GERÄT AN EIN ZWEITES MOBILES ENDGERÄT**
METHOD AND COMPUTER PROGRAM FOR TRANSFERRING AN ALREADY ESTABLISHED WIRELESS COMMUNICATION LINK BETWEEN A FIRST MOBILE TERMINAL AND A FIRST WIRELESS COMMUNICATION TERMINAL TO A SECOND MOBILE TERMINAL
PROCÉDÉ ET PROGRAMME INFORMATIQUE PERMETTANT DE TRANSFÉRER UN COUPLAGE DE COMMUNICATION SANS FIL DÉJÀ ÉTABLI ENTRE UN PREMIER TERMINAL MOBILE ET UN PREMIER APPAREIL DE COMMUNICATION SANS FIL À UN SECOND TERMINAL MOBILE

(43) Veröffentlichungstag der Anmeldung: 24.11.2021
(73) Patentinhaber: GIRA GIERSIEPEN GmbH & Co. KG, 42477 Radevormwald (DE)
(72) Erfinder: Strembski, Christoph, 44795 Bochum (DE)
(74) Vertreter: Angerhausen, Christoph

(56) Entgegenhaltungen:
- CN-A- 109 981 426
- US-A1- 2015 373 760
- US-A1- 2017 099 157

## Beschreibung

Die Erfindung betrifft ein Verfahren zur Übergabe einer bereits eingerichteten Drahtloskommunikationskopplung zwischen einem ersten mobilen Endgerät und einem ersten drahtloskommunikationsfähigen Gerät, insbesondere eines Hausautomationssystems, an ein zweites mobiles Endgerät, aufweisend die Schritte:
a) Übermitteln von Drahtloskommunikationskopplungsinformationen betreffend die Drahtloskommunikationskopplung zwischen dem ersten mobilen Endgerät und dem ersten drahtloskommunikationsfähigen Gerät an das zweite mobile Endgerät;
b) Aktivieren der bereits eingerichteten Drahtloskommunikationskopplung zwischen dem ersten mobilen Endgerät und dem ersten drahtloskommunikationsfähigen Gerät mittels des ersten mobilen Endgeräts und Versetzen des ersten drahtloskommunikationsfähigen Geräts in einen Kopplungsmodus;
c) Deaktivieren der bereits eingerichteten Drahtloskommunikationskopplung zwischen dem ersten mobilen Endgerät und dem ersten drahtloskommunikationsfähigen Gerät;
d) Koppeln des zweiten mobilen Endgeräts mit dem ersten drahtloskommunikationsfähigen Gerät, während sich das erste drahtloskommunikationsfähige Gerät im Kopplungsmodus befindet.

Ein Verfahren zur Übergabe einer bereits eingerichteten Drahtloskommunikationskopplung zwischen einem ersten mobilen Endgerät und einem ersten drahtloskommunikationsfähigen Gerät an ein zweites mobiles Endgerät ist bekannt aus der Druckschrift US 2015/373760 A1. Ähnliche Verfahren sind außerdem bekannt aus der US 2017/099157 A1 oder der CN 109 981 426 A.

In einer Installation, beispielsweise ein Hausautomationssystem, mit einer großen Anzahl Bluetooth-fähiger Geräte, deren Steuerung über ein mobiles Endgerät ermöglicht werden soll, ist jedes neue mobile Endgerät, für welches die Bedienung ebenfalls eingerichtet oder welches diese übernehmen soll, mit jedem einzelnen Bluetooth-fähigen Gerät bislang erneut und separat zu koppeln. Dabei muss jedes der Geräte beispielsweise durch Drücken einer Taste oder Umlegen eines Schalters in einen Kopplungsmodus beziehungsweise in einen Pairing-Mode versetzt werden. Dies ist insbesondere bei schwer zugänglich verbauten Geräten wie bei der Deckenmontage und für den Fall, dass die Geräte Verblendungselemente wie Blendenringe aufweisen, hinter denen die zu betätigende die Taste verdeckt ist, mit erheblichem Aufwand verbunden. In komplexen Hausautomationssystemen sind außerdem häufig unterschiedliche Aufsätze am Markt. Die Geräte können dabei jeweils unterschiedliche Bedienvarianten aufweisen, um in den Modus "Pairing" zu gelangen. Beispielsweise kann bei einem Gerät ein Ring vorgesehen sein, den man abnehmen muss, um die Taste zu erreichen, ein anderes Gerät kann an seiner Unterseite einen Schiebeschalter aufweisen, ein Weiteres zwei an den Ecken angeordnete Tasten, noch ein anderes kann eine berührungsempfindliche Fläche aufweisen.

Bei einigen der einzurichtenden Verbindungen kann es außerdem vorkommen, dass vor der Verbindungsaufnahme eine Passworteingabe erforderlich ist. Diese sogenannten Pairing-PINs müssen dabei ebenfalls für alle betroffenen Geräte separat erneut eingegeben werden. Dabei müssen die alten und zumeist nur sehr selten verwendeten PINs wahlweise notiert oder im Kopf bereitgehalten werden. Bei Installationen mit einer Vielzahl an Geräten, bei Hausautomationssystemen sind beispielsweise zehn bis zwanzig Bluetooth-fähige Geräte keine Seltenheit, entsteht dadurch ein erheblicher Aufwand. Dieser entsteht wiederkehrend einerseits bei einer erstmaligen Einrichtung, andererseits bei Neuanschaffung oder dem Wechsel von mobilen Endgeräten oder der Zugänglichmachung der Gerätesteuerung für weitere Familienmitglieder oder Freunde. Das unmittelbare Übertragen der Verbindung von einem Smartphone zu einem anderen wird dabei von beiden bekannten Betriebssystemen iOS und android verhindert.

Es ist daher die Aufgabe der Erfindung, ein Verfahren und ein Computerprogramm bereitzustellen, mit welchem die Einrichtung einer Drahtloskommunikationskopplung zwischen einem mobilen Endgerät und einem drahtloskommunikationsfähigen Gerät vereinfacht wird.

Die Aufgabe wird gelöst durch ein Verfahren mit den Merkmalen des Anspruchs 1 beziehungsweise durch ein Computerprogramm mit den Merkmalen des Anspruchs 10 gelöst. Die abhängigen Ansprüche betreffen jeweils vorteilhafte Ausführungsformen der Erfindung.

Demgemäß ist vorgesehen, ein Verfahren zur Übergabe einer bereits eingerichteten Drahtloskommunikationskopplung zwischen einem ersten mobilen Endgerät und einem ersten drahtloskommunikationsfähigen Gerät, insbesondere eines Hausautomationssystems, an ein zweites mobiles Endgerät bereitzustellen, aufweisend die Schritte:
Übermitteln von Drahtloskommunikationskopplungsinformationen betreffend die Drahtloskommunikationskopplung zwischen dem ersten mobilen Endgerät und dem ersten drahtloskommunikationsfähigen Gerät an das zweite mobile Endgerät;
Aktivieren der bereits eingerichteten Drahtloskommunikationskopplung zwischen dem ersten mobilen Endgerät und dem ersten drahtloskommunikationsfähigen Gerät mittels des ersten mobilen Endgeräts und Versetzen des ersten drahtloskommunikationsfähigen Geräts in einen Kopplungsmodus;
Deaktivieren der bereits eingerichteten Drahtloskommunikationskopplung zwischen dem ersten mobilen Endgerät und dem ersten drahtloskommunikationsfähigen Gerät;
Koppeln des zweiten mobilen Endgeräts mit dem ersten drahtloskommunikationsfähigen Gerät, während sich das erste drahtloskommunikationsfähige Gerät im Kopplungsmodus befindet.

Eine bereits eingerichtete Drahtloskommunikationskopplung im Sinne der Anmeldung kann eine Punkt-zu-Punkt-Funkverbindung zwischen zwei drahtloskommunikationsfähigen Geräten sein, welche bereits hergestellt wurde und wahlweise aktiviert sein kann, so dass beide Geräte miteinander kommunizieren können, oder geparkt sein kann, so dass die Verbindung inaktiv im Sinne eines Datenaustauschs ist, beide Geräte jedoch weiterhin synchronisiert sind und bei Bedarf aktiv werden können. Dies kann beispielsweise der Fall sein, wenn sich beide Geräte in Funkreichweite zueinander befinden und an beiden Geräten die Drahtloskommunikationsfunktion aktiviert ist, so dass automatisch die Verbindung aktiviert wird. Dies kann dadurch erfolgen, dass erkannte drahtloskommunikationsfähige Geräte durch jedes der Geräte in einem internen Speicher in einer Liste gespeichert werden kann. Die mobilen Endgeräte sind dabei ebenfalls drahtloskommunikationsfähig und fungieren jeweils als Master. Demgegenüber fungieren die mit dem mobilen Endgerät zu koppelnden drahtloskommunikationsfähigen Geräte als Slaves. Dabei ist ein Master jeweils für die Steuerung der Kommunikation zwischen dem mobilen Endgerät und dem zumindest einen drahtloskommunikationsfähigen Gerät zuständig. In einem Hausautomationssystem mit mehreren Teilnehmern inklusive zumindest eines mobilen Endgeräts und mehreren drahtloskommunikationsfähigen Geräten kann die Kommunikation innerhalb eines Piconetzes organisiert sein. Beispielsweise können Thermostate, Leuchten, Bewegungs- oder Rauchmelder oder Heimentertainmentkomponenten drahtloskommunikationsfähig ausgebildet sein. Drahtloskommunikationskopplungsinformationen im Sinne der Anmeldung können insbesondere Passwörter umfassen, welche für jedes der drahtloskommunikationsfähigen Geräte individuell vergeben sein können. Ferner können die Drahtloskommunikationskopplungsinformationen Informationen über die Zuordnung des Geräts zu einem bestimmten Raum oder ähnliche Attribute umfassen. Aktivieren der bereits eingerichteten Drahtloskommunikationskopplung im Sinne der Anmeldung kann bedeuten, dass eine bereits eingerichtete Drahtloskommunikationskopplung von einem geparkten Zustand in einen aktiven Zustand versetzt wird. Versetzen eins drahtloskommunikationsfähigen Geräts in einen Kopplungsmodus im Sinne der Anmeldung kann bedeuten, dass das drahtloskommunikationsfähige Gerät zumindest temporär, beispielsweise für 1 bis 3 Minuten, in einen Erkennen-Modus versetzt wird, in welchem es von anderen drahtloskommunikationsfähigen Geräten wie mobilen Endgeräten erkannt werden kann, sobald diese sich in Funkreichweite befinden. Deaktivieren der bereits eingerichteten Drahtloskommunikationskopplung zwischen dem ersten mobilen Endgerät und dem ersten drahtloskommunikationsfähigen Gerät im Sinne der Anmeldung kann bedeuten, dass eine aktive Verbindung in den Parkmodus versetzt wird. Koppeln des zweiten mobilen Endgeräts mit einem drahtloskommunikationsfähigen Gerät kann bedeuten, dass beide Geräte in eine aktive Punkt-zu-Punkt-Kommunikation zueinander gebracht werden und beide Geräte gegenseitig Verbindungsinformationen jeweils in einem internen Speicher in einer Liste hinterlegen. Koppeln des zweiten mobilen Endgeräts mit einem drahtloskommunikationsfähigen Gerät kann ferner bedeuten, dass die Verbindung nach erfolgter Kopplung vom aktiven Zustand in den Parkmodus versetzt wird, um gegebenenfalls mit einem weiteren drahtloskommunikationsfähigen Gerät gekoppelt werden zu können.

Das erste mobile Endgerät kann ferner mit einer Mehrzahl drahtloskommunikationsfähiger Geräte, insbesondere eines Hausautomationssystems, jeweils bereits eingerichtete Drahtloskommunikationskopplungen aufweisen, wobei das Verfahren weiterhin folgende Schritte aufweisen kann:
e) Bei Feststellung, dass sich das erste drahtloskommunikationsfähige Gerät nicht mehr im Kopplungsmodus befindet, Wiederholung der Schritte a bis d mit einem weiteren der Mehrzahl drahtloskommunikationsfähiger Geräte;
f) Wiederholung der Schritte a bis e für alle weiteren drahtloskommunikationsfähigen Geräte der Mehrzahl drahtloskommunikationsfähiger Geräte.

Nach Feststellung der erfolgten Übergabe aller Drahtloskommunikationskopplungen zwischen dem ersten mobilen Endgerät und der Mehrzahl drahtloskommunikationsfähiger Geräte an das zweite mobile Endgerät kann die Übergabe beendet werden. Dies kann bedeuten, dass das erste mobile Endgerät mit keinem weiteren Gerät in der Umgebung eine aktive Verbindung aufbaut beziehungsweise keines dieser Geräte in einen Kopplungsmodus versetzt. Das erste und/oder das zweite mobile Endgerät kann eine Benachrichtigung über die Ausgabeeinheit ausgeben, welche die Information der erfolgten Übergabe aller drahtloskommunikationsfähiger Geräte der Mehrzahl drahtloskommunikationsfähiger Geräte beinhaltet.

Ferner kann das erste mobile Endgerät bei Feststellung, dass sich das derzeit zu übergebende drahtloskommunikationsfähige Gerät außer Reichweite des ersten mobilen Endgeräts befindet, eine entsprechende Benachrichtigung über eine Ausgabeeinheit des ersten mobilen Endgeräts ausgeben. Die Benachrichtigung kann eine Information darüber enthalten, an welchem Ort des Hausautomationssystem sich das zu koppelnde Gerät befindet, um einen Nutzer des ersten mobilen Endgeräts in die Reichweite des Geräts zu lotsen. Die Benachrichtigung kann ferner eine Information über den im Netzwerk verwendeten Namen des Geräts enthalten.

Außerdem kann auch das zweite mobile Endgerät bei Feststellung, dass sich das derzeit zu übergebende drahtloskommunikationsfähige Gerät außer Reichweite des zweiten mobilen Endgeräts befindet, eine entsprechende Benachrichtigung über eine Ausgabeeinheit des zweiten mobilen Endgeräts ausgeben. Die Benachrichtigung kann eine Information darüber enthalten, an welchem Ort des Hausautomationssystem sich das zu koppelnde Gerät befindet, um einen Nutzer des zweiten mobilen Endgeräts in die Reichweite des Geräts zu lotsen.

Insbesondere kann vorgesehen sein, dass die Drahtloskommunikationskopplung eine Bluetooth- oder eine WLAN-Kopplung ist.

Es kann vorgesehen sein, dass die Drahtloskommunikationskopplungsinformationen ein Kopplungspasswort umfassen. Bei Übertragung des Kopplungspassworts vom ersten auf das zweite mobile Endgerät kann vorgesehen sein, dass das Passwort so abgespeichert wird, dass keine Eingabe des Passworts auf dem zweiten mobilen Endgeräts erfolgen muss, um dieses mit dem betreffenden Drahtloskommunikationsgerät zu koppeln. Die Drahtloskommunikationskopplungsinformationen können in einem internen Speicher des ersten und/oder des zweiten mobilen Endgeräts gespeichert sein. Alternativ können diese auch in einer Online-Cloud gespeichert sein, wobei Übertragung der Informationen in diesem Zusammenhang die Zugänglichmachung der Informationen für das zweite mobile Endgerät bedeutet.

Ferner kann das Versetzen der drahtloskommunikationsfähigen Geräte in einen Kopplungsmodus ferngesteuert mittels des ersten mobilen Endgeräts erfolgen. Durch das ferngesteuerte Aktivieren von Pairing-Modes kann vermieden werden, dass ein Nutzer eines Hausautomationssystems schwer zugängliche drahtloskommunikationsfähige Geräte jeweils separat am Gerät selbst betätigen muss.

Darüber hinaus kann die Auswahl des jeweils nächsten drahtloskommunikationsfähigen Geräts der Mehrzahl drahtloskommunikationsfähiger Geräte in Schritt f auf das Gerät mit der derzeit höchsten Signalstärke fallen. Bereits gekoppelte Geräte werden dabei nicht erneut ausgewählt, auch wenn deren Signalstärke größer ist als die eines noch nicht gekoppelten Geräts. Der Vorteil der Auswahl nach dieser Hierarchie liegt darin, dass jeweils das nächste Gerät ausgewählt wird und dadurch die geringste Wegstrecke zurückgelegt werden muss, um sämtliche Geräte zu erreichen.

Die Erfindung betrifft ferner ein Computerprogramm beziehungsweise Computerprogrammprodukt, installiert auf einem ersten mobilen Endgerät, aufweisend eine bereits eingerichtete Drahtloskommunikationskopplung zwischen diesem und einem ersten drahtloskommunikationsfähigen Gerät, insbesondere eines Hausautomationssystems, und auf einem zweiten mobilen Endgerät, umfassend Befehle, die bei der Ausführung des Programms durch das erstes mobile Endgerät dieses veranlassen,
I. Drahtloskommunikationskopplungsinformationen betreffend die Drahtloskommunikationskopplung zwischen dem ersten mobilen Endgerät und dem ersten drahtloskommunikationsfähigen Gerät an das zweite mobile Endgerät zu übermitteln,
II. die bereits eingerichtete Drahtloskommunikationskopplung zwischen dem ersten mobilen Endgerät und dem ersten drahtloskommunikationsfähigen Gerät zu aktivieren und das erste drahtloskommunikationsfähigen Gerät in einen Kopplungsmodus zu versetzen,
III. anschließend die Drahtloskommunikationskopplung zwischen dem ersten mobilen Endgerät (2) und dem ersten drahtloskommunikationsfähigen Gerät zu deaktivieren,
   ferner umfassend Befehle, die bei der Ausführung des Programms durch das zweite mobile Endgerät dieses veranlassen,
IV. mit dem ersten drahtloskommunikationsfähigen Gerät zu koppeln, während sich das erste drahtloskommunikationsfähige Gerät im Kopplungsmodus befindet.
   Dabei kann das erste mobile Endgerät mit einer Mehrzahl drahtloskommunikationsfähiger Geräte, insbesondere eines Hausautomationssystems, jeweils bereits eingerichtete Drahtloskommunikationskopplungen aufweisen, wobei das Computerprogramm ferner Befehle umfassen kann, die bei der Ausführung des Programms durch das erste mobile Endgerät dieses veranlassen,
V. ab der Feststellung, dass sich das erste drahtloskommunikationsfähige Gerät nicht mehr im Kopplungsmodus befindet, die Schritte I. bis III. mit einem weiteren der Mehrzahl drahtloskommunikationsfähiger Geräte zu wiederholen,
   wobei das Computerprogramm ferner Befehle umfasst, die bei der Ausführung des Programms durch das zweite mobile Endgerät dieses veranlassen,
VI. mit dem weiteren drahtloskommunikationsfähigen Gerät zu koppeln, während sich dieses im Kopplungsmodus befindet,
wobei das Computerprogramm ferner Befehle umfassen kann, die bei der Ausführung des Programms durch das erste mobile Endgerät dieses veranlassen, die Schritte I.-III. und V. für alle drahtloskommunikationsfähigen Geräte der Mehrzahl drahtloskommunikationsfähiger Geräte zu wiederholen, und wobei das Computerprogramm ferner Befehle umfassen kann, die bei der Ausführung des Programms durch das zweite mobile Endgerät dieses veranlassen, die Schritte IV. und VI. für alle weiteren drahtloskommunikationsfähigen Geräte der Mehrzahl drahtloskommunikationsfähiger Geräte zu wiederholen.

Das Computerprogramm kann ferner Befehle umfassen, die bei der Ausführung des Programms durch das erste mobile Endgerät dieses veranlassen, nach Feststellung der erfolgten Übergabe aller Drahtloskommunikationskopplungen zwischen dem ersten mobilen Endgerät und der Mehrzahl drahtloskommunikationsfähiger Geräte an das zweite mobile Endgerät die Übergabe zu beenden.

Ferner kann das Computerprogramm Befehle umfassen, die bei der Ausführung des Programms durch das erste mobile Endgerät dieses veranlassen, bei der Feststellung, dass sich das derzeit zu übergebende drahtloskommunikationsfähige Gerät außer Reichweite des ersten mobilen Endgeräts befindet, eine entsprechende Benachrichtigung über eine Ausgabeeinheit des ersten mobilen Endgeräts auszugeben.

Darüber hinaus kann das Computerprogramm Befehle umfassen, die bei der Ausführung des Programms durch das zweite mobile Endgerät dieses veranlassen, bei der Feststellung, dass sich das derzeit zu übergebende drahtloskommunikationsfähige Gerät außer Reichweite des zweiten mobilen Endgeräts befindet, eine entsprechende Benachrichtigung über eine Ausgabeeinheit des zweiten mobilen Endgeräts auszugeben.

Außerdem kann das Computerprogramm Befehle umfassen, die bei der Ausführung des Programms durch das erste mobile Endgerät dieses veranlassen, bei der Bestimmung des jeweils nächsten drahtloskommunikationsfähigen Geräts der Mehrzahl drahtloskommunikationsfähiger Geräte in Schritt V. das Gerät mit der derzeit höchsten Signalstärke auszuwählen.

Beispielhafte Ausführungsformen der Erfindung werden anhand der nachfolgenden Figuren erläutert. Dabei zeigt:
- Fig. 1: eine beispielhafte Darstellung eines Hausautomationssystems mit mehreren drahtloskommunikationsfähigen Geräten, welche mit einem ersten mobilen Endgerät gekoppelt sind;
- Fig. 2: eine beispielhafte Darstellung des Hausautomationssystems aus Figur 1, dessen Geräte mit dem ersten mobilen Endgerät und einem zweiten mobilen Endgerät gekoppelt sind.

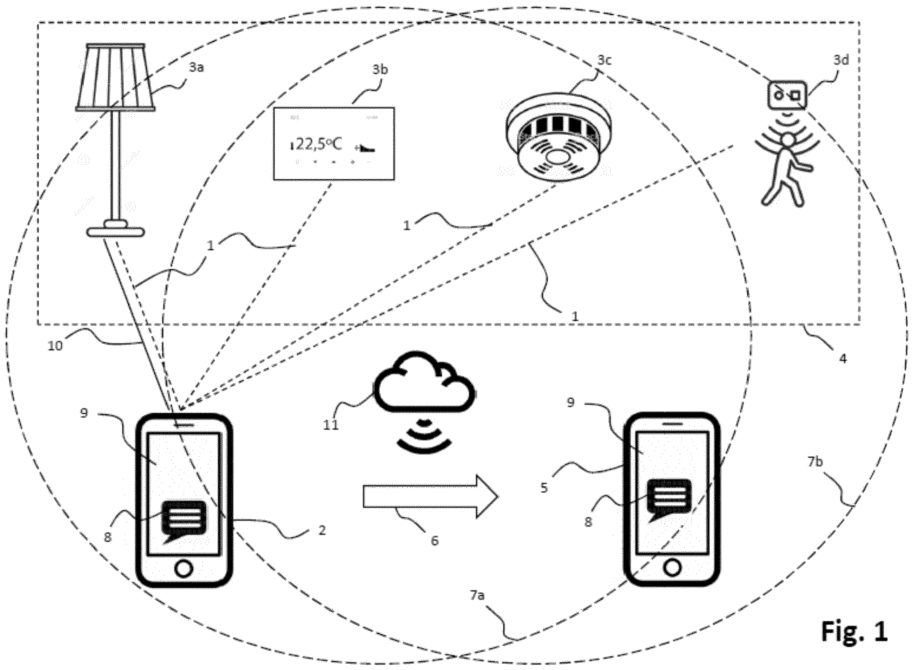

Figur 1 zeigt ein Hausautomationssystem 4 aufweisend eine Mehrzahl drahtloskommunikationsfähiger Geräte beziehungsweise Bluetooth-fähiger Geräte, beispielhaft dargestellt sind eine Lampe 3a, ein Thermostat 3b, ein Rauchmelder 3c sowie ein Bewegungsmelder 3d. Die Geräte 3a bis 3d weisen jeweils bereits eingerichtete Drahtloskommunikationskopplungen 1a mit einem ersten mobilen Endgerät, beispielsweise einem Smartphone, 2 auf, wobei sich die Verbindungen zu den Geräten 3b bis 3d wie dargestellt in einem inaktiven Parkmodus befinden, so dass keine aktive Kommunikationsverbindung mit dem Smartphone 2 besteht. Demgegenüber besteht zwischen der Lampe 3a und dem Smartphone 2 eine aktive Verbindung 10, so dass das Smartphone 2 die Drahtloskommunikationseinheit der Lampe 3a in einen Pairing-Modus schalten und sich anschließend von Gerät 3a trennen kann, sodass ein zweites mobiles Endgerät 5 eine Kopplung mit der Lampe 3a herstellen kann. Dabei befinden sich das erste Smartphone 2 in Funkreichweite 7a zur Lampe 3a und das zweite Smartphone 5 ebenfalls in Funkreichweite 7b zur Lampe 3a. Im Zuge des Übergabevorgangs, jedoch vor dem Kopplungsvorgang des zweiten Smartphones 5 mit dem jeweiligen Gerät, betreffend die Lampe 3a sendet das erste Smartphone 2 Drahtloskommunikationskopplungsinformationen 6 beinhaltend gerätespezifische Informationen zur Lampe 3a, insbesondere ein gegebenenfalls eingerichtetes Gerätepasswort, an das zweite Smartphone 5, so dass dieses ohne Passworteingabe und ohne händische Aktivierung des Pairingmodus der Lampe 3a mit dieser gekoppelt werden kann. Gegebenenfalls können die Drahtloskommunikationskopplungsinformationen 6 auch in einem Cloud-Speicher 11 hinterlegt sein, zu welchem dem zweiten Smartphone 5 im Zuge der Übergabeaktion Zugang verschafft wird. Dieses Vorgehen wird sukzessive für die übrigen Geräte 3b bis 3d in dieser Reihenfolge wiederholt, da diese sich jeweils weiter entfernt vom ersten Smartphone 2 befinden und dementsprechend die Signalstärke der Geräte für das erste Smartphone 2 von 3a bis 3d abnimmt. Das erste Smartphone 2 stellt dabei sicher, dass zu einer Zeit jeweils nur ein Gerät 3a-3d auf "Pairing" gestellt ist. Da sich der Bewegungsmelder 3d außerhalb der Reichweite 7a vom ersten Smartphone 2 befindet, gibt dieses über die Ausgabeeinheit 9, vorliegend ein Display, alternativ über einen Lautsprecher, eine Benachrichtigung 8 aus, dass sich das gewünschte Gerät 3d außer Reichweite 7a befindet. Gleichermaßen erscheint auf der Ausgabeeinheit 9 des zweiten Smartphones 5 eine Benachrichtigung 8, dass sich die Lampe 3a außer Reichweite 7b befindet.

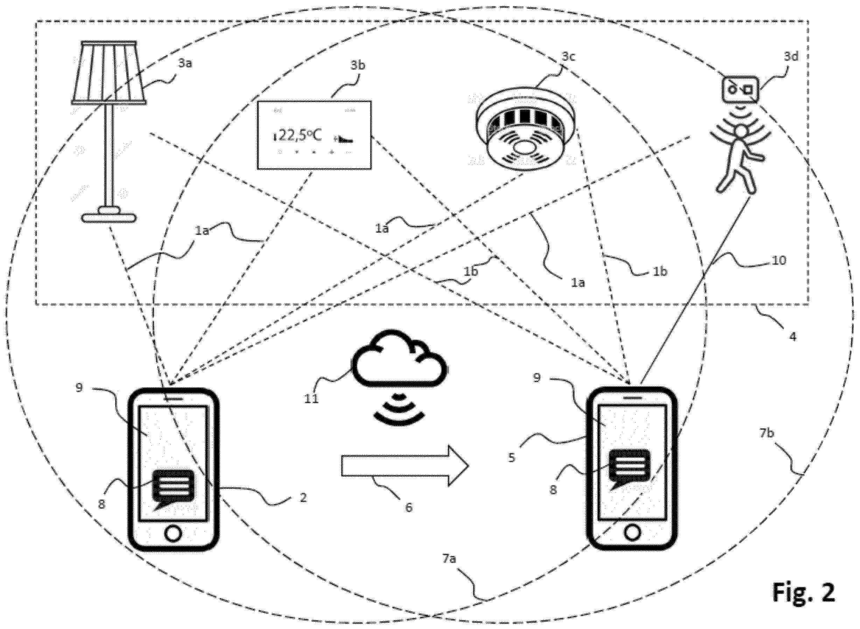

Figur 2 zeigt dasselbe Hausautomationssystem 4 wie Figur 1 in fortgeschrittenem Stadium der Übergabe der Drahtloskommunikationskopplungen für die Geräte 3a bis 3d. Dabei ist zu erkennen, dass nun auch das zweite Smartphone 5 bereits eingerichtete Drahtloskommunikationskopplungen 1b zu den Geräten 3a bis 3c aufweist, welche jeweils in einen inaktiven Zustand versetzt sind. Demgegenüber weist das zweite Smartphone noch keine bereits eingerichtete Drahtloskommunikationskopplung mit dem Bewegungsmelder 3d auf, sondern weist zu diesem gerade eine aktive Verbindung 10 auf, was bedeutet, dass das erste Smartphone 2 zuvor mit dem Bewegungsmelder 3d eine aktive Verbindung 10 aufgenommen, diesen in einen Pairing-Modus geschaltet und anschließend diese aktive Verbindung 10 deaktiviert hat, so dass das in Reichweite 7b befindliche zweite Smartphone 5 mit dem Gerät 3d koppeln kann. Im Anschluss deaktiviert das zweite Smartphone 5 auch die Verbindung 10 zum Gerät 3d, so dass beide Smartphones 2 und 5 nun zu allen Geräten 3a bis 3d jeweils bereits eingerichtete Drahtloskommunikationskopplungen 1a beziehungsweise 1b aufweisen. Nach erfolgter Übergabe sämtlicher im Hausautomationssystem 4 befindlichen Drahtloskommunikationskopplungen beendet Smartphone 2 den Übergabevorgang und Smartphone 5 den Übernahmevorgang.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: bereits eingerichtete Drahtloskommunikationskopplung
- 2: erstes mobiles Endgerät
- 3: drahtloskommunikationsfähiges Gerät
- 4: Hausautomationssystem
- 5: zweites mobiles Endgerät
- 6: Drahtloskommunikationskopplungsinformationen
- 7: Reichweite
- 8: Benachrichtigung
- 9: Ausgabeeinheit
- 10: aktive Drahtloskommunikationskopplung
- 11: Cloudspeicher

## Patentansprüche

1. Verfahren zur Übergabe einer bereits eingerichteten Drahtloskommunikationskopplung (1) zwischen einem ersten mobilen Endgerät (2) und einem ersten drahtloskommunikationsfähigen Gerät (3a), insbesondere eines Hausautomationssystems (4), an ein zweites mobiles Endgerät (5), aufweisend die Schritte:
a. Übermitteln von Drahtloskommunikationskopplungsinformationen (6) betreffend die Drahtloskommunikationskopplung zwischen dem ersten mobilen Endgerät (2) und dem ersten drahtloskommunikationsfähigen Gerät (3a) an das zweite mobile Endgerät (5);
b. danach Aktivieren der bereits eingerichteten Drahtloskommunikationskopplung (1) zwischen dem ersten mobilen Endgerät (2) und dem ersten drahtloskommunikationsfähigen Gerät (3a) mittels des ersten mobilen Endgeräts (2) und Versetzen des ersten drahtloskommunikationsfähigen Geräts (3a) in einen Kopplungsmodus;
c. danach Deaktivieren der bereits eingerichteten Drahtloskommunikationskopplung (1) zwischen dem ersten mobilen Endgerät (2) und dem ersten drahtloskommunikationsfähigen Gerät (3a);
d. danach Koppeln des zweiten mobilen Endgeräts (5) mit dem ersten drahtloskommunikationsfähigen Gerät (3a), während sich das erste drahtloskommunikationsfähige Gerät (3a) im Kopplungsmodus befindet.

2. Verfahren nach Anspruch 1, wobei das erste mobile Endgerät (2) mit einer Mehrzahl drahtloskommunikationsfähiger Geräte (3a-d), insbesondere eines Hausautomationssystems (4), jeweils bereits eingerichtete Drahtloskommunikationskopplungen (1) aufweist, wobei das Verfahren weiterhin folgende Schritte aufweist:
e. Bei Feststellung, dass sich das erste drahtloskommunikationsfähige Gerät (3a) nicht mehr im Kopplungsmodus befindet, Wiederholung der Schritte a bis d mit einem weiteren (3b) der Mehrzahl drahtloskommunikationsfähiger Geräte (3a-d);
f. Wiederholung der Schritte a bis e für alle weiteren drahtloskommunikationsfähigen Geräte (3c-d) der Mehrzahl drahtloskommunikationsfähiger Geräte (3a-d).

3. Verfahren nach Anspruch 2, wobei nach Feststellung der erfolgten Übergabe aller Drahtloskommunikationskopplungen zwischen dem ersten mobilen Endgerät (2) und der Mehrzahl drahtloskommunikationsfähiger Geräte (3a-d) an das zweite mobile Endgerät (5) die Übergabe beendet wird.

4. Verfahren nach einem der vorangehenden Ansprüche, wobei das erste mobile Endgerät (2) bei Feststellung, dass sich das derzeit zu übergebende drahtloskommunikationsfähige Gerät (3) außer Reichweite (7) des ersten mobilen Endgeräts (2) befindet, eine entsprechende Benachrichtigung über eine Ausgabeeinheit (9) des ersten mobilen Endgeräts (2) ausgibt.

5. Verfahren nach einem der vorangehenden Ansprüche, wobei das zweite mobile Endgerät (5) bei Feststellung, dass sich das derzeit zu übergebende drahtloskommunikationsfähige Gerät (3) außer Reichweite (7) des zweiten mobilen Endgeräts (5) befindet, eine entsprechende Benachrichtigung über eine Ausgabeeinheit (9) des zweiten mobilen Endgeräts (5) ausgibt.

6. Verfahren nach einem der vorangehenden Ansprüche, wobei die Drahtloskommunikationskopplung eine Bluetooth- oder eine WLAN-Kopplung ist.

7. Verfahren nach einem der vorangehenden Ansprüche, wobei die Drahtloskommunikationskopplungsinformationen (6) ein Kopplungspasswort umfassen.

8. Verfahren nach einem der vorangehenden Ansprüche, wobei das Versetzen der drahtloskommunikationsfähigen Geräte (3a-d) in einen Kopplungsmodus ferngesteuert mittels des ersten mobilen Endgeräts (2) erfolgt.

9. Verfahren nach einem der Ansprüche 2 bis 8, wobei die Auswahl des jeweils nächsten drahtloskommunikationsfähigen Geräts (3) der Mehrzahl drahtloskommunikationsfähiger Geräte (3a-d) in Schritt f auf das Gerät mit der derzeit höchsten Signalstärke fällt.

10. Computerprogramm, installiert auf einem ersten mobilen Endgerät (2), aufweisend eine bereits eingerichtete Drahtloskommunikationskopplung (1) zwischen diesem und einem ersten drahtloskommunikationsfähigen Gerät (3a), insbesondere eines Hausautomationssystems (4), und auf einem zweiten mobilen Endgerät (5), umfassend Befehle, die bei der Ausführung des Programms durch das erstes mobile Endgerät (2) dieses veranlassen,
I. Drahtloskommunikationskopplungsinformationen (6) betreffend die Drahtloskommunikationskopplung zwischen dem ersten mobilen Endgerät (2) und dem ersten drahtloskommunikationsfähigen Gerät (3a) an das zweite mobile Endgerät (5) zu übermitteln,
II. die bereits eingerichtete Drahtloskommunikationskopplung (1) zwischen dem ersten mobilen Endgerät (2) und dem ersten drahtloskommunikationsfähigen Gerät (3) danach zu aktivieren und das erste drahtloskommunikationsfähigen Gerät (3a) in einen Kopplungsmodus zu versetzen,
III. anschließend die Drahtloskommunikationskopplung zwischen dem ersten mobilen Endgerät (2) und dem ersten drahtloskommunikationsfähigen Gerät (2) zu deaktivieren,
ferner umfassend Befehle, die bei der Ausführung des Programms durch das zweite mobile Endgerät (5) dieses veranlassen,
IV. mit dem ersten drahtloskommunikationsfähigen Gerät (3a) zu koppeln, während sich das erste drahtloskommunikationsfähige Gerät (3a) im Kopplungsmodus befindet.

11. Computerprogramm nach Anspruch 10, wobei das erste mobile Endgerät (2) mit einer Mehrzahl drahtloskommunikationsfähiger Geräte (3a-d), insbesondere eines Hausautomationssystems (4), jeweils bereits eingerichtete Drahtloskommunikationskopplungen (1) aufweist, wobei das Computerprogramm ferner Befehle umfasst, die bei der Ausführung des Programms durch das erste mobile Endgerät (2) dieses veranlassen,
V. ab der Feststellung, dass sich das erste drahtloskommunikationsfähige Gerät (2) nicht mehr im Kopplungsmodus befindet, die Schritte I. bis III. mit einem weiteren (3b) der Mehrzahl drahtloskommunikationsfähiger Geräte (3a-d) zu wiederholen,
wobei das Computerprogramm ferner Befehle umfasst, die bei der Ausführung des Programms durch das zweite mobile Endgerät (5) dieses veranlassen,
VI. mit dem weiteren drahtloskommunikationsfähigen Gerät (3b) zu koppeln, während sich dieses im Kopplungsmodus befindet,
wobei das Computerprogramm ferner Befehle umfasst, die bei der Ausführung des Programms durch das erste mobile Endgerät (2) dieses veranlassen, die Schritte I.-III. und V. für alle drahtloskommunikationsfähigen Geräte (3a-d) der Mehrzahl drahtloskommunikationsfähiger Geräte (3a-d) zu wiederholen, und wobei das Computerprogramm ferner Befehle umfasst, die bei der Ausführung des Programms durch das zweite mobile Endgerät (5) dieses veranlassen, die Schritte IV. und VI. für alle weiteren drahtloskommunikationsfähigen Geräte (3c-d) der Mehrzahl drahtloskommunikationsfähiger Geräte (3a-d) zu wiederholen.

12. Computerprogramm nach Anspruch 11, welches ferner Befehle umfasst, die bei der Ausführung des Programms durch das erste mobile Endgerät (2) dieses veranlassen, nach Feststellung der erfolgten Übergabe aller Drahtloskommunikationskopplungen zwischen dem ersten mobilen Endgerät (2) und der Mehrzahl drahtloskommunikationsfähiger Geräte (3a-d) an das zweite mobile Endgerät (5) die Übergabe zu beenden.

13. Computerprogramm nach einem der Ansprüche 10 bis 12, welches ferner Befehle umfasst, die bei der Ausführung des Programms durch das erste mobile Endgerät (2) dieses veranlassen, bei der Feststellung, dass sich das derzeit zu übergebende drahtloskommunikationsfähige Gerät (3) außer Reichweite (7) des ersten mobilen Endgeräts (2) befindet, eine entsprechende Benachrichtigung über eine Ausgabeeinheit (9) des ersten mobilen Endgeräts (2) auszugeben.

14. Computerprogramm nach einem der Ansprüche 10 bis 13, welches ferner Befehle umfasst, die bei der Ausführung des Programms durch das zweite mobile Endgerät (5) dieses veranlassen, bei der Feststellung, dass sich das derzeit zu übergebende drahtloskommunikationsfähige Gerät (3) außer Reichweite (7) des zweiten mobilen Endgeräts (5) befindet, eine entsprechende Benachrichtigung über eine Ausgabeeinheit (9) des zweiten mobilen Endgeräts (5) auszugeben.

15. Computerprogramm nach einem der Ansprüche 10 bis 14, welches ferner Befehle umfasst, die bei der Ausführung des Programms durch das erste mobile Endgerät (2) dieses veranlassen, bei der Bestimmung des jeweils nächsten drahtloskommunikationsfähigen Geräts (3) der Mehrzahl drahtloskommunikationsfähiger Geräte (3a-d) in Schritt V. das Gerät mit der derzeit höchsten Signalstärke auszuwählen.

## Claims

1. A method for handing over an already established wireless communication coupling (1) between a first mobile terminal (2) and a first wireless communication capable device (3a), in particular a home automation system (4), to a second mobile terminal (5), comprising the steps:
a. Transmitting wireless communication coupling information (6) concerning the wireless communication coupling between the first mobile terminal (2) and the first wireless communication capable device (3a) to the second mobile terminal (5);
b. thereafter, activating the already established wireless communication coupling (1) between the first mobile terminal (2) and the first wireless communication capable device (3a) by means of the first mobile terminal (2) and putting the first wireless communication capable device (3a) into a coupling mode;
c. thereafter, deactivating the already established wireless communication coupling (1) between the first mobile terminal (2) and the first wireless communication capable device (3a);
d. thereafter pairing the second mobile terminal (5) with the first wireless communication enabled device (3a) while the first wireless communication enabled device (3a) is in pairing mode.

2. The method according to claim 1, wherein the first mobile terminal (2) comprises wireless communication couplings (1) already established with a plurality of wireless communication capable devices (3a-d), in particular a home automation system (4), respectively, the method further comprising the steps of:
e. upon determining that the first wireless communication capable device (3a) is no longer in pairing mode, repeating steps a through d with another (3b) of the plurality of wireless communication capable devices (3a-d);
f. Repeating steps a to e for all other wireless communication capable devices (3c-d) of the plurality of wireless communication capable devices (3a-d).

3. The method according to claim 2, wherein after determining that all wireless communication couplings between the first mobile terminal (2) and the plurality of wireless communication capable devices (3a-d) have been handed over to the second mobile terminal (5), the handover is terminated.

4. The method according to any one of the preceding claims, wherein the first mobile terminal (2), upon determining that the wireless communication capable device (3) currently to be handed over is out of range (7) of the first mobile terminal (2), outputs a corresponding notification via an output unit (9) of the first mobile terminal (2).

5. The method according to any one of the preceding claims, wherein the second mobile terminal (5), upon determining that the wireless communication capable device (3) currently to be handed over is out of range (7) of the second mobile terminal (5), outputs a corresponding notification via an output unit (9) of the second mobile terminal (5).

6. The method of any one of the preceding claims, wherein the wireless communication coupling is a Bluetooth coupling or a WLAN coupling.

7. The method according to any one of the preceding claims, wherein the wireless communication coupling information (6) comprises a coupling password.

8. The method according to any one of the preceding claims, wherein putting the wireless communication capable devices (3a-d) into a pairing mode is performed remotely by means of the first mobile terminal (2).

9. The method according to any one of claims 2 to 8, wherein the selection of the next respective wireless communication capable device (3) of the plurality of wireless communication capable devices (3a-d) in step f falls on the device with the currently highest signal strength.

10. A computer program installed on a first mobile terminal (2), having an already established wireless communication coupling (1) between it and a first wireless communication capable device (3a), in particular a home automation system (4), and on a second mobile terminal (5), comprising commands which, when the program is executed by the first mobile terminal (2), cause it to be executed,
I. to transmit wireless communication coupling information (6) concerning the wireless communication coupling between the first mobile terminal (2) and the first wireless communication capable device (3a) to the second mobile terminal (5),
II. to thereafter activate the already established wireless communication coupling (1) between the first mobile terminal (2) and the first wireless communication capable device (3), and to put the first wireless communication capable device (3a) into a coupling mode,
III. subsequently deactivating the wireless communication coupling between the first mobile terminal (2) and the first wireless communication-enabled device (2), further comprising commands that, when the second mobile terminal (5) executes the program, cause the second mobile terminal (5) to execute the program,
IV. pair with the first wireless communication enabled device (3a) while the first wireless communication enabled device (3a) is in pairing mode.

11. The computer program according to claim 10, wherein the first mobile terminal (2) has wireless communication couplings (1) already established with a plurality of wireless communication capable devices (3a-d), in particular a home automation system (4), respectively, wherein the computer program further comprises commands that, when the first mobile terminal (2) executes the program, cause the program to be executed,
V. from the determination that the first wireless communication capable device (2) is no longer in the pairing mode, repeating steps I. to III. with another (3b) of the plurality of wireless communication capable devices (3a-d),
wherein the computer program further comprises instructions that, when executed by the second mobile terminal (5), cause the program to be executed,
VI. pair with the other wireless communication enabled device (3b) while it is in pairing mode,
wherein the computer program further comprises instructions that, when the first mobile terminal (2) executes the program, cause the first mobile terminal (2) to repeat steps I.-III. and V. for all wireless communication-enabled devices (3a-d) of the plurality of wireless communication-enabled devices (3a-d), and wherein the computer program further comprises instructions that, when the second mobile terminal (5) executes the program, cause the second mobile terminal (5) to repeat steps IV. and VI. for all other wireless communication-enabled devices (3c-d) of the plurality of wireless communication-enabled devices (3a-d).

12. The computer program of claim 11, further comprising instructions that, when the first mobile terminal (2) executes the program, cause the first mobile terminal (2) to terminate the handover after determining that all wireless communication couplings between the first mobile terminal (2) and the plurality of wireless communication-capable devices (3a-d) have been completed to the second mobile terminal (5).

13. The computer program according to any one of claims 10 to 12, further comprising instructions that, when the first mobile terminal (2) executes the program, cause the first mobile terminal (2) to output a corresponding notification via an output unit (9) of the first mobile terminal (2) upon determining that the wireless communication-enabled device (3) currently being handed over is out of range (7) of the first mobile terminal (2).

14. The computer program according to any one of claims 10 to 13, further comprising instructions which, when the program is executed by the second mobile terminal (5), cause the second mobile terminal (5) to output a corresponding notification via an output unit (9) of the second mobile terminal (5) upon determining that the wireless communication-enabled device (3) currently being handed over is out of range (7) of the second mobile terminal (5).

15. The computer program according to any one of claims 10 to 14, further comprising instructions that, when the program is executed by the first mobile terminal (2), cause the first mobile terminal (2) to select the device with the currently highest signal strength when determining the next respective wireless communication capable device (3) of the plurality of wireless communication capable devices (3a-d) in step V.

## Revendications

1. Procédé de transfert d'un couplage de communication sans fil (1) déjà établi entre un premier terminal mobile (2) et un premier appareil apte à une communication sans fil (3a), plus particulièrement d'un système de domotique (4), à un deuxième terminal mobile (5), comprenant les étapes suivantes :
a. transmission d'informations de couplage de communication sans fil (6) concernant le couplage de communication sans fil entre le premier terminal mobile (2) et le premier appareil apte à une communication sans fil (3a) au deuxième terminal mobile (5) ;
b. puis activation du couplage de communication sans fil (1) déjà établi entre le premier terminal mobile (2) et le premier appareil apte à une communication sans fil (3a) au moyen du premier terminal mobile (2) et passage du premier appareil apte à une communication sans fil (3a) dans un mode de couplage ;
c. puis désactivation du couplage de communication sans fil (1) déjà établi entre le premier terminal mobile (2) et le premier appareil apte à une communication sans fil (3a) ;
d. puis couplage du deuxième terminal mobile (5) avec le premier appareil apte à une communication sans fil (3a), pendant que le premier appareil apte à une communication sans fil (3a) se trouve en mode de couplage.

2. Procédé selon la revendication 1, dans lequel le premier terminal mobile (2), avec une pluralité d'appareils aptes à une communication sans fil (3a-d), plus particulièrement d'un système de domotique (4), comprend des couplages de communication sans fil (1) déjà établis, dans lequel le procédé comprend en outre les étapes suivantes :
e. lors de la constatation que le premier appareil apte à une communication sans fil (3a) ne se trouve plus en mode de couplage, répétition des étapes a à d avec un autre (3b) de la pluralité d'appareils apte à une communication sans fil (3a-d) ;
f. répétition des étapes a à e pour tous les autres appareils apte à une communication sans fil (3c-d) de la pluralité d'appareils apte à une communication sans fil (3a-d).

3. Procédé selon la revendication 2, dans lequel, après la constatation que le transfert de tous les couplages de communication sans fil entre le premier terminal mobile (2) et la pluralité d'appareils apte à une communication sans fil (3a-d) au deuxième terminal mobile (5) a été effectué, le transfert est terminé.

4. Procédé selon l'une des revendications précédentes, dans lequel le premier terminal mobile (2), lors de la constatation que l'appareil apte à une communication sans fil (3) actuellement à transférer se trouve hors de portée (7) du premier terminal mobile (2), émet un message correspondant par l'intermédiaire d'une unité d'émission (9) du premier terminal mobile (2).

5. Procédé selon l'une des revendications précédentes, dans lequel le deuxième terminal mobile (5), lors de la constatation que l'appareil apte à une communication sans fil (3) actuellement à transférer se trouve hors de portée (7) du deuxième terminal mobile (5), émet un message correspondant par l'intermédiaire d'une unité d'émission (9) du deuxième terminal mobile (5).

6. Procédé selon l'une des revendications précédentes, dans lequel le couplage de communication sans fil est un couplage Bluetooth ou WLAN.

7. Procédé selon l'une des revendications précédentes, dans lequel les informations de couplage de communication sans fil (6) comprennent un mot de passe de couplage.

8. Procédé selon l'une des revendications précédentes, dans lequel le passage des appareils apte à une communication sans fil (3a-d) dans un mode de couplage a lieu à distance au moyen du premier terminal mobile (2).

9. Procédé selon l'une des revendications 2 à 8, dans lequel la sélection de l'appareil apte à une communication sans fil (3) suivant de la pluralité d'appareils aptes à une communication sans fil (3a-d) à l'étape f tombe sur l'appareil avec l'intensité de signal la plus élevée actuellement.

10. Programme informatique installé sur un premier terminal mobile (2), comprenant un couplage de communication sans fil (1) déjà établi entre celui-ci et un premier appareil apte à une communication sans fil (3a), plus particulièrement d'un système de domotique (4), et sur un deuxième terminal mobile (5), comprenant des instructions qui, lors de l'exécution du programme par le premier terminal mobile (2), font en sorte que celui-ci
I. transmette des informations de couplage de communication sans fil (6) concernant le couplage de communication sans fil entre le premier terminal mobile (2) et le premier appareil apte à une communication sans fil (3a) au deuxième terminal mobile (5),
II. active ensuite le couplage de communication sans fil (1) déjà établi entre le premier terminal mobile (2) et le premier appareil apte à une communication sans fil (3) et mette le premier appareil apte à une communication sans fil (3a) dans un mode de couplage,
III. désactive ensuite le couplage de communication sans fil entre le premier terminal mobile (2) et le premier appareil apte à une communication sans fil (2),
comprenant en outre des instructions qui, lors de l'exécution du programme par le deuxième terminal mobile (5), font en sorte que celui-ci
IV. se couple avec le premier appareil apte à une communication sans fil (3a) pendant que le premier appareil apte à une communication sans fil (3a) se trouve en mode de couplage.

11. Programme informatique selon la revendication 10, dans lequel le premier terminal mobile (2), avec une pluralité d'appareils aptes à une communication sans fil (3ad), plus particulièrement d'un système de domotique (4), comprend des couplages de communication sans fil (1) déjà établis, dans lequel le programme informatique comprend en outre des instructions qui, lors de l'exécution du programme par le premier terminal mobile (2), font en sorte que celui-ci
V. à partir de la constatation que le premier appareil apte à une communication sans fil (2) ne se trouve plus en mode de couplage, répète les étapes I. à III. avec un autre (3b) de la pluralité d'appareils aptes à une communication sans fil (3a-d),
dans lequel le programme informatique comprend en outre des instructions qui, lors de l'exécution du programme par le deuxième terminal mobile (5), font en sorte que celui-ci
VI. se couple avec l'autre appareil apte à une communication sans fil (3b) pendant que celui-ci se trouve en mode de couplage,
dans lequel le programme informatique comprend en outre des instructions qui, lors de l'exécution du programme par le premier terminal mobile (2), font en sorte que celui-ci répète les étapes I. à III. et V. pour tous les appareils aptes à une communication sans fil (3a-d) et dans lequel le programme informatique comprend en outre des instructions qui, lors de l'exécution du programme par le deuxième terminal mobile (5), font en sorte que celui-ci répète les étapes IV. et VI. pour tous les autres appareils aptes à une communication sans fil (3c-d) de la pluralité d'appareils aptes à une communication sans fil (3a-d) .

12. Programme informatique selon la revendication 11, qui comprend en outre des instructions qui, lors de l'exécution du programme par le premier terminal mobile (2), font en sorte que celui-ci, après constatation du transfert effectué de tous les couplages de communication sans fil entre le premier terminal mobile (2) et la pluralité d'appareils aptes à une communication sans fil (3a-d) au deuxième terminal mobile (5), termine le transfert.

13. Programme informatique selon l'une des revendications 10 à 12, qui comprend en outre des instructions qui, lors de l'exécution du programme par le premier terminal mobile (2), font en sorte que celui-ci, lors de la constatation que l'appareil apte à une communication sans fil (3), actuellement à transférer, se trouve hors de portée (7) du premier terminal mobile (2), émet un message correspondant par l'intermédiaire d'une unité d'émission (9) du premier terminal mobile (2).

14. Programme informatique selon l'une des revendications 10 à 13, qui comprend en outre des instructions qui, lors de l'exécution du programme par le deuxième terminal mobile (5), font en sorte que celui-ci, lors de la constatation que l'appareil apte à une communication sans fil (3) actuellement à transférer se trouve hors de portée (7) du deuxième terminal mobile (5), émet un message correspondant par l'intermédiaire d'une unité d'émission (9) du deuxième terminal mobile (5).

15. Programme informatique selon l'une des revendications 10 à 14, qui comprend en outre des instructions qui, lors de l'exécution du programme par le premier terminal mobile (2), font en sorte que celui-ci, lors de la détermination de l'appareil apte à une communication sans fil (3) suivant de la pluralité d'appareils aptes à une communication sans fil (3a-d)à l'étape V., sélectionne l'appareil avec l'intensité de signal la plus élevée actuellement.
